# EUROPEAN PATENT APPLICATION

(11) **EP 4 650 913 A1**
(43) Date of publication of application: **19.11.2025**
(21) Application number: 25174536.0
(22) Date of filing: 06.05.2025
(51) Int. Cl.: G06F 1/32, G06F 11/34, G06F 9/50

(54) **SYSTEMS AND METHOD FOR PERFORMANCE MANAGEMENT OF SYSTEM ON A CHIP**

(30) Priority: 16.05.2024 US 202418666099
(71) Applicant: Microsoft Technology Licensing, LLC, Redmond, WA 98052-6399 (US)
(72) Inventor: Grable, David Alan, Redmond, WA, 98052 (US); Jahagirdar, Sanjeev, Redmond, WA, 98052 (US); Xu, Xiaoling, Redmond, WA, 98052 (US)
(74) Representative: Grünecker Patent- und Rechtsanwälte PartG mbB

(57) **Abstract**

Examples of the present disclosure describe devices, systems, and methods for runtime profiling workload on a system on a chip (SOC). In examples. A SOC records runtime metrics while running a workload using counters to calculate the usage of logical partitions of the SOC. The SOC uses the runtime metrics to determine the logical partitions' performance characteristics and the processors' optimal clock frequency in each logical partition based on the performance characteristics. The SOC sets the clock speeds of a processor in a logical partition while the workload is still running on the SOC to its optimal clock frequency.

## Description

### BACKGROUND

Traditionally, hardware accelerators are specialized computation devices for efficiently running a specific type of workload on computer hardware, instead of on a general-purpose computer. Specialized computation devices can be specialized hardware, such as a graphics processing unit (GPU), hardware with pre-fixed functionality, such as field programmable gate arrays (FPGAs), or application-specific integrated circuits (ASICs). Such hardware increases the performance efficiency of the workload running on the hardware, but the hardware is limited in its functionality. Efficiently running a workload includes efficient use of input resources and processing of input data, resulting in reduced energy consumption, decreased latency, and increased throughput. For instance, a GPU is a hardware accelerator for efficiently rendering graphical images.

In some scenarios, hardware accelerators contain logical partitions, each composed of different sorts of specialized hardware designed for a specific type of task performed as part of a workload for efficient running of a workload. For example, a shader in a graphics processing unit (GPU) or a spam controller in a server are hardware accelerators that can accelerate a specific task, such as shading in graphics or controlling spam from reaching email accounts. In other scenarios, hardware accelerators are part of a general-purpose processor, such as a central processing unit (CPU), adjusting the performance of a CPU for efficient running of a variety of tasks by profiling the tasks and later programming the hardware acceleration features in the CPU. In both scenarios, the requirement of prior knowledge of tasks limits the use of hardware accelerators in scenarios with evolving tasks forming a workload.

Further, specialized hardware, such as a tensor processing unit (TPU) or a system on a chip (SOC) may have multiple physical or logical partitions with components with different capabilities that need performance management to run the entire TPU or SOC efficiently. For example, a specialized hardware for Artificial intelligence workloads may contains components for performing matrix arithmetic efficiently, for performing identical operations on long vectors, or for transferring large quantities of data quickly to another accelerator to facilitate operations requiring more processing power than a single accelerator can provide. Depending on the workload, the activity level of each of these components may vary over time. If prior knowledge of the type and timing of tasks is available, the hardware components can be tuned to the specific workload to improve the performance of the components and the entire specialized hardware. However, prior knowledge of tasks of a workload to program the acceleration and performance management of the components may not be permitted due to confidentiality, privacy and intellectual property issues concerning the amount and type of data consumed and the number and type of computations performed.

It is with respect to these and other general considerations that the aspects disclosed herein have been made. Also, although relatively specific problems may be described, it should be understood that the examples should not be limited to solving the specific problems identified in the background or elsewhere in this disclosure.

### SUMMARY

Examples of the present disclosure describe systems and methods for runtime profiling and dynamically adjusting the performance of a system on a chip used as a hardware accelerator.

According to one or more embodiments of the present disclosure, a system on a chip providing runtime profiling and performance controls includes a processor and a memory coupled to the processor, consisting of computer-executable instructions executed by the system to perform operations. The operations include recording runtime metrics during the runtime of a workload by using counters associated with logical partitions of a SOC. The counters calculate the usage of each of the logical partitions. The SOC provides the runtime metrics to a profiler to determine the performance characteristics of each logical partition. The performance manager in the SOC then determines the optimal clock frequency and settings for other control parameters to apply to a processor in at least one partition of the logical partitions to run the workload based on the performance characteristics. The SOC adjusts the processor in the partition(s) in runtime to its determined optimal clock frequency to run the workload or tasks within a workload. The performance manager continues to readjust control parameters in runtime to maintain optimal performance for the evolving workload, without requiring a priori knowledge of the type and timing of individual tasks in the workload.

This summary is provided to introduce a selection of concepts in a simplified form that are further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the description which follows and, in part, will be apparent from the description, or may be learned by practice of the disclosure.

### BRIEF DESCRIPTION OF THE DRAWINGS

Examples are described with reference to the following Figures.
FIG. 1 illustrates a block diagram of an example SOC for runtime profiling and performance control.
FIGS. 2 illustrates the interaction between hardware and firmware portions of a SOC.
FIG. 3 is a flow diagram of the interaction between components of an example SOC.
FIG. 4 illustrates various internal and external inputs to a SOC to generate performance controls.
FIG. 5 depicts an example method for managing runtime profiling and adjusting the performance of a SOC.
FIG. 6 is a block diagram illustrating an example of the physical components of a computing device for practicing aspects of the disclosure.

### DETAILED DESCRIPTION

Traditionally, hardware efficiency is improved by pre-designing hardware to run a workload with specific tasks. For example, GPUs are specially designed to handle tasks related to generating graphics. In some scenarios, the performance of a processing unit (e.g., GPU or CPU) is improved by including pre-designed specialized hardware as part of the processing unit. For example, a GPU includes a shader to increase the overall performance of the GPU. Pre-designing hardware limits the use of hardware to run a specific set of tasks efficiently.

Alternatively, processing units, such as general-purpose CPUs, that can run a variety of tasks can be made efficient by adjusting the performance (e.g., increasing clock speed and/or power supplied) of a CPU. In another scenario, the performance of a processing unit is improved by accelerating one or more partitions (e.g., matrix multiplier, vector processing unit) of a processing unit. The partitions of a processing unit may be individual physical components or logical units within a single chip (e.g., SOC). The workload that runs on a CPU or a partition is profiled to adjust the CPU's performance statically upon completion of the workload to run future workloads efficiently. The profile includes the history of instructions executed while running a workload.

Accordingly, to run hardware efficiently, the knowledge of the tasks is known beforehand, as in the case of GPUs and/or from the profile post-completion of a workload on a CPU. In both scenarios, there is a static relation between tasks and performance adjustments. In the case of a GPU, the performance adjustments are preset to tasks related to the generation of graphics. In the case of a CPU, a static set of mappings between the tasks and performance adjustments are maintained to improve the efficiency of the CPU. This limits the performance adjustment to a fixed set of profiles representing types of workloads or tasks within workloads.

If the types of tasks that are part of a workload are evolving, then pre-designed hardware will not be efficient, and a static set of mappings will not include the new type of tasks and workloads. Furthermore, pre-knowledge of tasks of a workload may not be available due to concerns with intellectual property, confidentiality, and data privacy. Accordingly, hardware needs to be designed to adjust performance in runtime to accommodate evolving types of tasks forming a workload run by hardware.

Furthermore, hardware such as SOCs include portions designed for specific tasks that can run a variety of tasks as part of a workload. Similarly, individual hardware chips are modularized as a plurality of chiplets with specific functionality packaged together to run a variety of tasks. In such hardware, improving the performance of a portion may impact another portion. For example, increasing the power consumption of a portion to increase its speed to improve the portion's performance reduces the available power of the total power for other portions and results in reduced efficiency of the hardware. In order to run a variety of tasks efficiently on such hardware, the performance of portions of the hardware needs to be adjusted dynamically as the needs of tasks of a workload evolve.

Performance adjustment includes hardware acceleration to accelerate data transfer and processing and increase throughput. Hardware acceleration includes increasing the frequency of a clock used with processors in hardware to run a workload. Performance adjustments must consider resource requirements and limits, such as energy consumption and electrical and power limits on hardware. For example, while hardware performance can be adjusted to run hardware faster at a higher clock speed, the hardware may not have access to the required electricity and/or power based on the set limits. Furthermore, in some cases, the side effects of running a workload on hardware need to be considered when adjusting the hardware performance. For example, hardware performance can be adjusted to run faster, but the connected heatsink limits the amount of heat that can be handled before harming the hardware.

The disclosed system reviews the tasks of a workload running on hardware in short periods to determine future tasks and workloads and to adjust the performance of hardware running a workload. The continuous review of tasks helps resolve any incorrect predictions of further tasks in a workload and readjusts the performance of hardware.

Aspects of the present disclosure provide various technical benefits. For instance, reviewing a small portion of a workload execution allows for runtime determination of performance requirements of a workload in the future and adjustment of performance of relevant portions of the hardware dynamically by increasing clock speed and bandwidth, resulting in an increased speed of execution of a workload and reduction of bandwidth clogging and hardware idle time. Additionally, by adjusting the performance of hardware dynamically and at regular intervals, any incorrect assumptions of future workload can be quickly fixed, reducing the waste of processing power and bandwidth. Further, the disclosed systems' ability to consider system constraints when adjusting clock speed and bandwidth ensures the safety of components powering the processors executing the workload by not overdrawing voltage.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

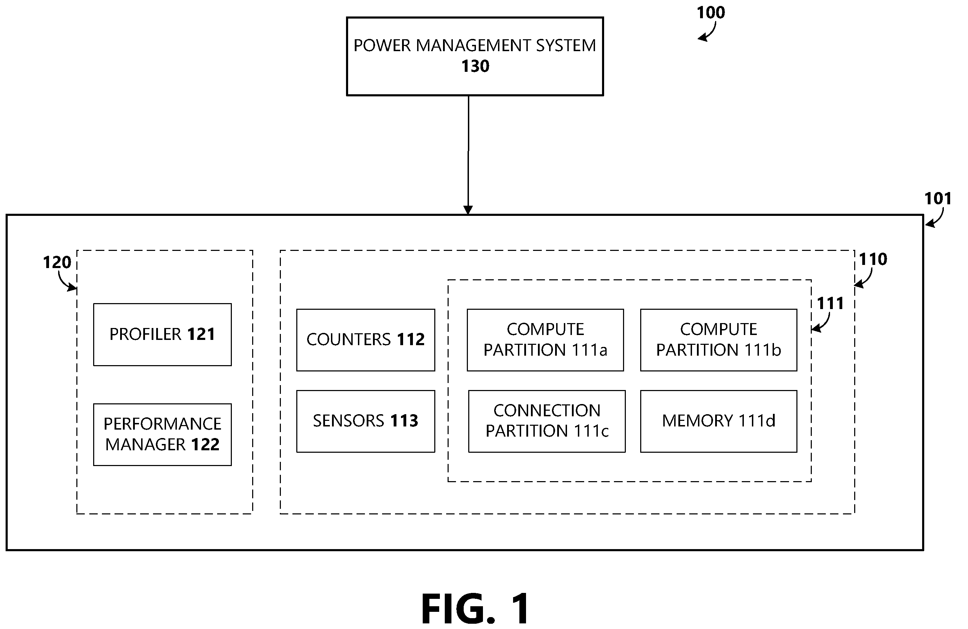

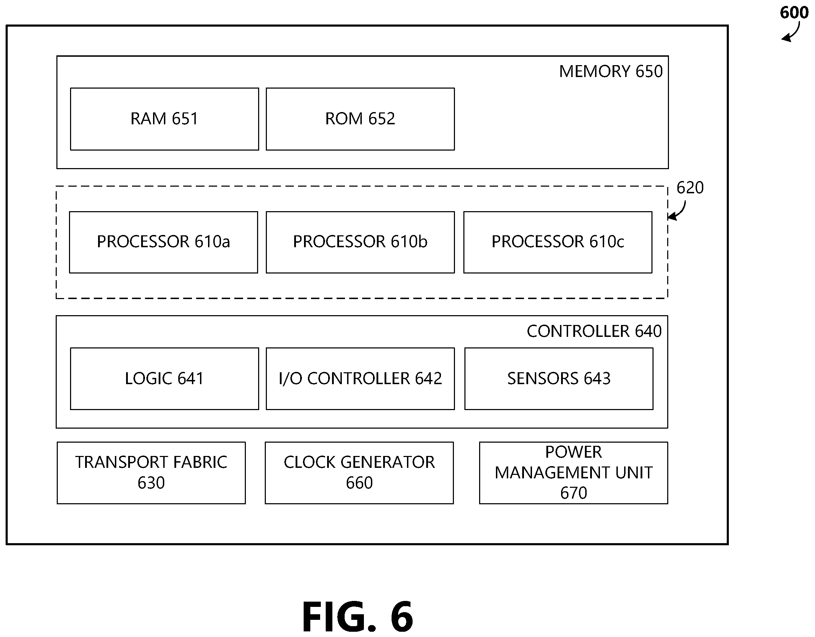

FIG. 1 illustrates a block diagram of a system with an example SOC for runtime profiling of a workload running on the SOC and performance control of SOC to run the workload efficiently. As illustrated in FIG. 1, system 100 includes SOC 101 and power management system 130. SOC 101, as depicted, is a combination of interdependent components that interact to form an integrated whole. Some components of SOC 101 are illustrative of software components that operate on a computing system or across a plurality of computing systems. In one example, components of systems disclosed herein are implemented on a single processing device. The processing device may provide an operating environment for software components to execute and use resources or facilities of such a system. An example of SOC with processing device(s) is depicted in FIG. 6. In another example, the components of systems disclosed herein are distributed across multiple processing devices.

SOC 101 includes processing and storage capabilities to execute instructions as part of running a workload and processing stored data. SOC 101 is made of a single chip on a single die. In some examples, each component of SOC 101 is a separate die, together forming a chip.

SOC 101 includes additional hardware and software to monitor the behavior of SOC 101 and its components. As illustrated in FIG. 1, SOC 101 includes hardware 110 and firmware 120 to adjust the performance of hardware 110 using modules in firmware 120. Hardware 110 runs a workload and measures the consumption of resources when running a workload. Hardware 110 includes partitions 111 to transfer and process data in one or more partitions. As illustrated in FIG. 1, partitions 111 include compute partitions 111a-b, connection partition 111, and memory 111d to run computations, transfer data between partitions, and store the results of computations, respectively, as part of running a workload.

Compute partitions 111a-b may include general-purpose processors, specialized processors, or a combination. Compute partitions 111a-b may contain multiple processors with a processor in each partition. In some examples, each partition of compute partitions 111a-c are cores of a single processor. Compute partitions 111a-b may be logical partitions of a single chip. For example, compute partitions 111a-b may be subunits of a processor. Compute partitions 111a-b may include specialized hardware to run specific workload tasks on SOC 101. For example, compute partitions 111a-b can be a matrix multiplier or vector compute, such as single instruction multiple data (SIMD) compute units within a processor.

Compute partitions 111a-b may share memory 111d or may each contain their own memory. In some examples, memory 111d is a hierarchy of memory present inside compute partitions 111a-b as a cache and outside to share data between compute partitions 111a-b.

Connection partition 111c connects compute partitions 111a-b and transfers data between compute partitions 111a-b and to and from memory 111d. Connection partition 111c may be etched lines on a circuit board forming SOC 101. In some examples, connection partition 111c may be a serial bus connecting compute partitions 111a-b internally with memory 111d and externally with other components of SOC 101.

Memory 111d is a non-volatile storage device, such as a read-only memory (ROM), or a volatile storage device, such as a random-access memory (RAM). Memory 111d may store program instructions for a workload running on compute partitions 111a-b and data for a workload processed by compute partitions 111a-b.

Counters 112 measure the resource consumption in terms of usage of partitions 111. Counters 112 may monitor the usage of partitions 111 to measure resource consumption. In some examples, each partition of partition 111 may contain counters 112, including utilization and event counters. Event counters may include events of a partition in partitions 111, such as total usage or usage at a particular time or continuous usage for a set amount of time. Utilization counters may measure resource utilization, such as time and number of partitions used to run a workload. Counters 112 may also include bandwidth counters that measure the usage levels of connection partition 111c to transfer data, the amount of data, and the frequency of data transfer between compute partitions 111a-b and between compute partitions 111a-b and memory 111d. Counters 112 may include aggregators that collect and/or sum the utilization of individual partitions. Counters 112 may run at a core clock speed set for SOC 101. In some examples, counters 112 may run at a base clock speed of partitions 111. In some examples, counters 112 are always on and log utilizations and events of each partition of partitions 111.

Counters 112 keep a record of every usage of a partition of partitions 111. The records may include the number of times each partition of partitions 111 is used and the amount of usage. For example, the amount of usage includes the time each partition of partitions 111 is used and the frequency of usage to run a workload.

Sensors 113 measure the resource consumption in terms of power usage when using partitions 111. Sensors 113 include circuitry and hardware to measure resource inputs to partitions 111 to run a workload. For example, sensors 113 measure the power and electricity consumption of each partition of partitions 111 when running a workload. Sensors 113 also measure the effects of running a workload on partitions 111. For example, sensors 113 measure the heat generated by each partition of partitions 111 when running a workload.

Sensors 113 measure power resource consumption at a particular physical point in system 100. Typically, power consumption is measured from the output of electrical components such as voltage regulators (not illustrated in FIG. 1).

Sensors 113 measure electricity consumption by SOC 101 or individual partitions 111 as current. Sensors 113 may include voltage sensors to measure current at a die level, which can compose a subset of or all partitions 111 based on the packaging of partitions 111.

Sensors 113 measure heat generation as temperature using temperature sensors at a die level or package level, which can include a subset of or all partitions 111, hardware 110, or SOC 101 based on the packaging of partitions 111 and SOC 101.

Measurements generated by counters 112 and sensors 113 are transmitted to firmware 120 to analyze further and provide performance adjustments to partitions 111. In some examples, sensors 113 transmit measured data to counters 112 for aggregating the total amount of measurements for running a workload on each partition of partitions 111.

Firmware 120 includes programs to evaluate and run a workload efficiently on hardware 110. As illustrated in FIG. 1, firmware 120 includes profiler 121 and performance manager 122. Firmware 120 may work in combination with components of hardware 110 to review inputs to partitions 111. For example, profiler 121 utilizes counters 112 to review the performance of partitions 111 while running a workload. Firmware 120 may use profiler 121 to sample the records of utilization and events recorded by counters 112. Firmware 120 may sample the records at a millisecond level associated with a portion of a currently running workload.

Profiler 121 of firmware 120 may determine bottlenecks of each partition of partitions 111 based on the utilization, event, and bandwidth history of partitions 111 logged by utilization, event, and bandwidth counters, respectively, of counters 112. Bottlenecks may include slowness in running a workload due to slow data transfer by connection partition 111c or slow computation by compute partitions 111a-b. In some examples, profiler 121 may predict bottlenecks by learning from previously determined bottlenecks. Profiler 121 may include a prediction model to determine bottlenecks in the utilization of partitions 111. A prediction model may be a heuristic model or a linear approximation model, such as Newton's method. In some examples, a prediction model is a suite of models used interchangeably based on patterns of utilization, events, and bandwidth history. Profiler 121 may modify the prediction model by adjusting the constants based on the outcome of performance control recommendations made by firmware 120 to hardware 110.

In some examples, profiler 121 may also determine the constraints of partitions 111. For example, profiler 121 may determine that while compute partitions 111a-b are capable of running a certain amount of workload, the attached heat sink can handle heat generated from an amount of workload that is smaller than the compute partitions 111a-b capability. In another example, while connection partition 111c can transfer a certain amount of data, the compute partitions 111a-b can only handle a smaller amount of data. Firmware 120 may utilize these constraints along with bottlenecks when making performance control recommendations to hardware 110.

Profiler 121 may also supervise to ensure that system 100's limits are not violated. The system limits include power consumption, electrical, and temperature limits. Profiler 121 analyzes data recorded by sensors 113 to determine any system limit violations. Profiler 121 may sum the usage of power resources and generated heat measured by sensors 113 and compare the sum to the system limits. Profiler 121 may then request performance manager 122 to limit the clock frequency of partitions 111 to ensure the power required, electricity consumed, and heat generated do not cross the system limits for power, electricity, and temperature. In some examples, profiler 121 may request performance manager 122 to reduce the clock frequency when violations of one or more system limits are observed.

Performance manager 122 reviews the results of profiler 121 to generate performance controls to improve the performance of partitions 111. In some instances, performance manager 122 may work with hardware 110 to adjust the performance of partitions 111. For example, performance manager 122 generates the upper and lower bounds of performance controls to apply to partitions 111, and hardware 110 fine-tunes the performance control values between the upper and lower bounds. Performance controls generated by accelerators 122 may include multiple types of controls, including clock frequency controls, throughput controls, and on/off controls.

Performance manager 122 may regulate the performance of all partitions in partitions 111 using clock frequency controls to adjust the clock frequency used by each partition. Performance manager 122 can set individual clock frequencies for each partition of partitions 111. For example, performance manager 122 may set a higher clock frequency than the preset core clock frequency for a partition for matrix multiplier as the accelerator observed increased usage of the partition containing matrix multiplier and set other partitions containing vector to compute at a lower clock speed. In some examples, performance manager 122 may set the same clock frequency for all partitions to enable connect partition 111c to transfer data at the same speed to compute partitions 111a-b.

Performance manager 122 may regulate the performance of partitions 111 using throughput controls to control the compute partitions 111a-b. Performance manager 122 may regulate the throughput of compute partitions 111a-b to process data matching the bandwidth capacity of connection partition 111c. In some examples, performance manager 122 may regulate the performance of partitions 111 using on/off controls to control the compute partitions 111a-b.

In some examples, firmware 120 may be the constraint in improving the performance of hardware 110. For example, firmware 120 may be slow in determining performance controls, resulting in performance controls to apply to partitions 111 for the predicted portion of workload to have completed running on partitions 111 without the gains from applying performance controls. System 100 may manage firmware 120's constraints by enhancing hardware 110 to manage some performance controls. For example, firmware 120 sets the upper and lower bounds of performance controls at its slow time scale, and hardware 110 sets finer values between upper and lower bounds at runtime at a faster pace. Hardware 110 may store instructions to set finer values of performance controls in memory 111d. Hardware 110 may utilize compute partitions 111a-b to determine the finer values. In some examples, hardware 110 may include a specialized processor/circuit to determine the finer values of performance controls.

Hardware 110 may communicate with firmware 120 control actions taken to apply performance controls provided by performance manager 122. In some instances, hardware 110 may apply a subset of performance controls provided by performance manager 122. For example, hardware 110, with the ability to fine-tune the performance control values between the upper and lower bounds, determines to retain the current values if it determines the current state of performance of a workload running on partitions 111 does not need an alteration. Hardware 110 may communicate with firmware 120 differently based on how SOC 101 and partitions 111 within SOC 101 are packaged. For example, in a multi-die packaging of SOC 101 with each partition of partitions 111 in a separate die, each partition independently communicates control actions taken by the partition. A coordinator (not illustrated in FIG. 1) may aggregate communications to coordinate the application of future performance controls and determination of violations of system limits.

Although SOC 101 is depicted as comprising a particular combination of hardware and firmware/software components, the scale and structure of devices and components described herein may vary and may include additional or fewer components than those described in Figure 1. For instance, counters 112 may be implemented by firmware 120, and/or performance manager 122 may be implemented in hardware to set hardware acceleration quickly.

Power management system 130 may provide power to run components of SOC 101. Power management system 130 may regulate overall power sent to SOC 101 based on the state of SOC 101. For example, power management system 130 may send power in smaller increments or decrements to SOC 101 when SOC 101 is turned on or off to avoid harm to SOC 101 from a sudden increase or decrease in voltage. In some examples, power management system 130 may provide power based on the amount requested by SOC 101 as determined by profiler 121 for a currently running workload. Power management system 130 may be local to SOC 101 on the same circuit board or remote on a tray or a computer system rack serving multiple SOCs including SOC 101 in trays in a rack.

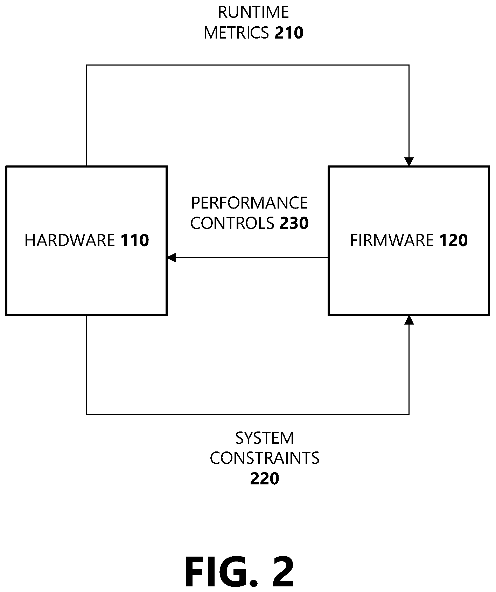

FIG. 2 illustrates the interaction between hardware and firmware portions of SOC 101 (as shown in FIG. 1). As illustrated in FIG. 2, hardware 110 and firmware 120 each provide input to the other to continuously regulate the performance of hardware 110 of SOC 101 to run efficiently. The inputs provided to hardware 110 result in updated outputs of runtime metrics 210 from hardware 110 transmitted to firmware 120. For example, performance controls 230 provided by firmware 120 to improve the performance of hardware 110 and result in updated runtime metrics 210 for evaluation by firmware 120 to generate future performance controls 230. When runtime metrics 210 have not improved or are not as expected, firmware 120 adjusts itself when generating performance controls 230. Firmware 120 adjusts itself by adjusting the model used for predicting future workload and generating performance controls to run future workload on partitions 111 of hardware 110.

Hardware 110 provides runtime metrics 210 of the tasks run by components of hardware 110 to firmware 120 to receive inputs to improve the performance of hardware 110. Hardware 110 also provides system constraints 220 to firmware to control the performance changes while confirming system constraints 220 are met by hardware 110. Firmware 120 provides performance controls 230 to control the performance of hardware 110 by increasing performance to meet the demands of a workload run on hardware 110 or lower performance to be within the prescribed limits of system constraints 220.

Runtime metrics 210 include the total usage and individual usage amount of each partition of partitions 111. For example, runtime metrics 210 may include the number of times a compute partition of compute partitions 111a-b is used or the amount of data transferred using connection partition 111c. Runtime metrics 210 may also include throughput of compute partitions 111a-b of hardware 110. Counters 112 may measure the total count and amount of usage of partitions 111 of hardware 110.

System constraints 220 may include system limits on resources used by hardware 110 to run a workload. For example, system constraints 220 may include maximum power and electricity available to partitions 111. In some examples, system constraints 220 may define constraints individually for each partition of partitions 111. System constraints 220 may include limitations of capabilities of hardware 110 when running a workload. For example, hardware 110 may include heat sinks that handle a certain amount of heat generated by hardware 110 to run a workload, limiting the performance even if hardware 110 is capable.

In some examples, system constraints 220 may include allowed patterns of resource consumption changes. For example, system constraints 220 include an allowed percentage change in power consumption provided over time when SOC 101 is turned on/off or partitions 111 begin running a workload. Such percentage change constraints help regulate voltage and avoid sudden spikes and dips, which can harm electronic components in SOC 101.

Performance controls 230 may include the frequency to set for clocks connected to each partition of partitions 111. In some examples, performance controls 230 may include turning on/off a partition of partitions 111 to provide the available power for SOC 101 to a subset of partitions 111, thus allowing the subset of partitions 111 to run at an increased clock frequency. Performance controls 230 may also include controls to the throughput of partitions 111. The throughput of a partition may be updated to avoid violating system constraints 220. Firmware 120 reviews runtime metrics 210 post applying performance controls 230 to determine if there is room for further performance improvement.

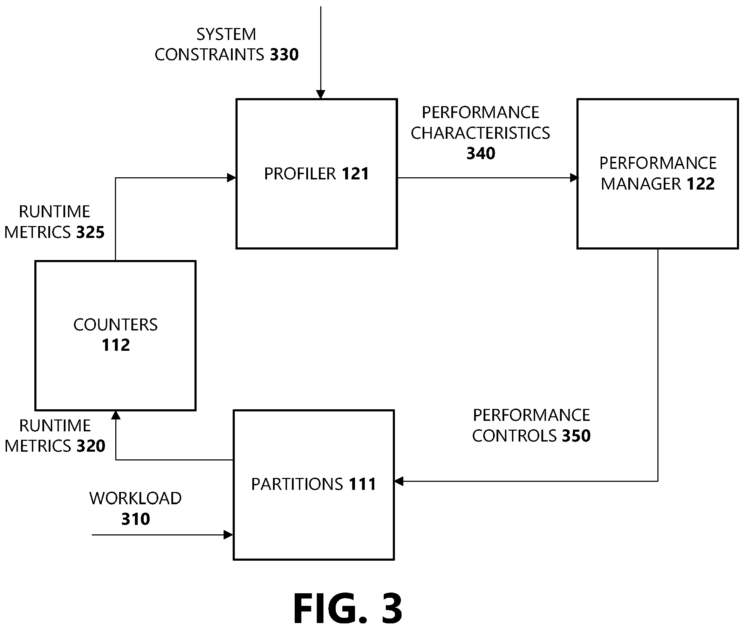

FIG. 3 is a flow diagram of the interaction between components of an exemplary SOC 101 (as shown in FIG 1) for dynamically profiling and adjusting the performance of SOC 101. The performance of SOC 101 is adjusted by adjusting the performance of partitions 111. Partitions 111 begins the performance adjustment process by providing the initial input of runtime metrics 320 to generate controls to adjust the performance of partitions 111.

Partitions 111 receive workload 310 as input and transmit runtime metrics 320 to counters 112 to begin the process of generating controls to adjust the performance of partitions 111. Runtime metrics 320 may include information about the usage of partitions 111. In some examples, runtime metrics 320 may include the amount of usage of a partition of partitions 111. The amount of usage of partitions 111 may include the time each partition of partitions 111 is used as part of executing tasks of workload 310. The amount of usage may include the amount of usage of resources, such as power, electricity, and bandwidth, by each partition of partitions 111. Partitions 111 may use the services of sensors 113 (as shown in FIG. 1) to calculate the amount of usage of resources by partitions 111. Partitions 111 may transmit runtime metrics 320 at regular intervals to counters 112. In some examples, partitions 111 may transmit the usage count and amount of usage of a partition at regular intervals. In some examples, partitions 111 may share runtime metrics upon completion of a task of workload 310. Counters 112 may also request details of the usage of partitions 111 at regular intervals and receive runtime metrics 320.

Counters 112 aggregate the usage of each partition and the amount of usage of each partition to generate updated runtime metrics 325. In some examples, counters 112 review workload 310 to determine the usage count of each partition of partitions 111. Counters 112 is part of hardware 110 (as shown in FIG. 1) to quickly calculate the usage count and amount of usage of partitions 111. Counters 112 transmit runtime metrics 325 to profiler 121 to evaluate the usage of partitions 111. The usage of partitions 111 includes the usage count of each partition of partitions 111, the amount of usage of each partition of partitions 111, and the times and frequency of usage of each partition of partitions 111. In some examples, profiler 121 may directly receive runtime metrics 320 from partitions 111 to evaluate the usage of partitions 111.

Profiler 121 may evaluate the usage of partitions 111 present in runtime metrics 325 in the context of system constraints 330 to determine both constraints and bottlenecks of performance of partitions 111. SOC 101 may receive system constraints 330 and process them to determine system constraints 330 specific to partitions 111. For example, system constraints 330 may include total power available for multiple SOCs in a rack computing system, and profiler 121 determines the portion of the total power needed by partitions 111 and/or SOC 101. Profiler 121 generates performance characteristics 340 upon evaluating runtime metrics 329 of partitions 111. Performance characteristics 340 define the behavior of partitions 111 when running a portion of a workload in the context of system constraints 330. For example, performance characteristics 340 define partitions 111 behavior in terms of usage percentage of the total capacity and idle time of each partition. While runtime metrics 325 defines the usage amount and usage count of partitions 111, runtime metrics 325 does not define how effectively partitions 111 were used and results of the partitions 111 behavior by running at a certain speed and processing data as part of executing a workload. Performance characteristics 340 include bottlenecks and constraints of partitions 111. Various bottlenecks and constraints of partitions 111 are provided in FIG. 1's description above.

Performance manager 122 determines performance controls 350 to improve the overall performance of partitions 111 when executing workload 310. Performance manager 122 may determine controls based on the performance characteristics 340. Performance controls 350 adjust the performance of partitions 111 by either increasing or decreasing the performance of partitions 111. A detailed description of various performance controls and their effect on partitions 111 is described in FIG. 1's description above.

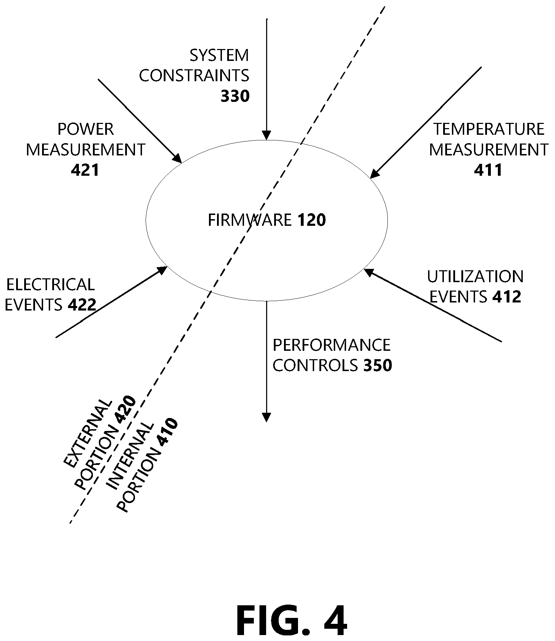

FIG. 4 illustrates various internal and external inputs to an example SOC 101 (as shown in FIG. 1) to generate performance controls. Firmware 120 takes as input a variety of information from internal portion 420, such as a SOC, and external portion 420, such as a rack computing system. Firmware 120 may receive inputs from internal portion 410 that provide information associated with components (e.g., partitions 111 of FIG. 1) running a workload (e.g., workload 310 of FIG. 3). For example, information from internal portion 410 includes usage information of partitions 111 to run a workload. The usage information may include the number of times of usage, the total amount of time of usage, and the frequency of usage of components of the internal portion 410. The usage information may also include the number of times an event has occurred and the frequency of an event when running a workload by components of the internal portion 410. The usage and event information may be collected and provided as utilization events 412 to firmware 120. In some examples, information from internal portion 410 includes the effects of running a workload by components of internal portion 410. For example, components of internal portion 410, such as partitions 111, generate heat due to partitions 111 running a workload. The heat is measured as temperature. As illustrated in FIG. 4, the information related to the effects of running a workload is presented as temperature measurement 411. Firmware 120 includes an algorithm to review and analyze the information from internal portion 410 to help generate controls to regulate the performance of a SOC.

Firmware 120 may also receive information from external portion 420 to help generate controls to manage a SOC's performance. External portion 420 may include hardware and circuitry that helps monitor the consumption of resources by components of internal portion 410 when running a workload. The information may include measurements of resources, such as power and electricity, consumed by internal portion 410 when running a workload. As illustrated in FIG. 4, the power required for running a workload is measured as power measurement 421, and usage of electricity is measured as electrical events 422 by sensors (e.g., sensors 113 of FIG. 1). In some examples, the information from external portion 420 may be provided to constrain the usage of resources. As illustrated in FIG. 4, system constraints 330 are provided as input information to firmware 120 from external portion 420 to constrain the resource consumption by internal portion 410 when running a workload. A detailed description of system constraints 330 is provided in FIGs. 1 and 3 descriptions above.

Firmware 120 analyzes the inputs from internal portion 410 and external portion 420 to generate performance controls 350 to regulate the performance of components of SOC in internal portion 410 that run a workload. Performance controls 350 includes a variety of controls, such as clock frequency controls to adjust the clock frequency of internal portion 410's components to run them faster or slower by increasing or decreasing the frequency of clocks associated with components of internal portion 410. Performance controls 350 may also include throughput controls to manage the throughput of components of internal portion 410. Throughput controls may help regulate the performance of controls to avoid violating system constraints 330 provided as input by external portion 420. Performance controls 350 may also include on/off controls to turn on or off components of internal portion 410. Turning off components of internal portion 410 currently not used for a running workload redirects available resources (e.g., power) to components currently used to run them at a higher speed. Firmware 120 may generate a subset or all varieties of performance controls to regulate the performance of internal portion 410 and its components.

Having described a system that may be employed by the aspects disclosed herein, this disclosure will now describe a method that may be performed by various aspects of the disclosure. In aspects, method 500 may be executed by a system, such as system 100 of Figure 1. However, method 500 is not limited to such examples.

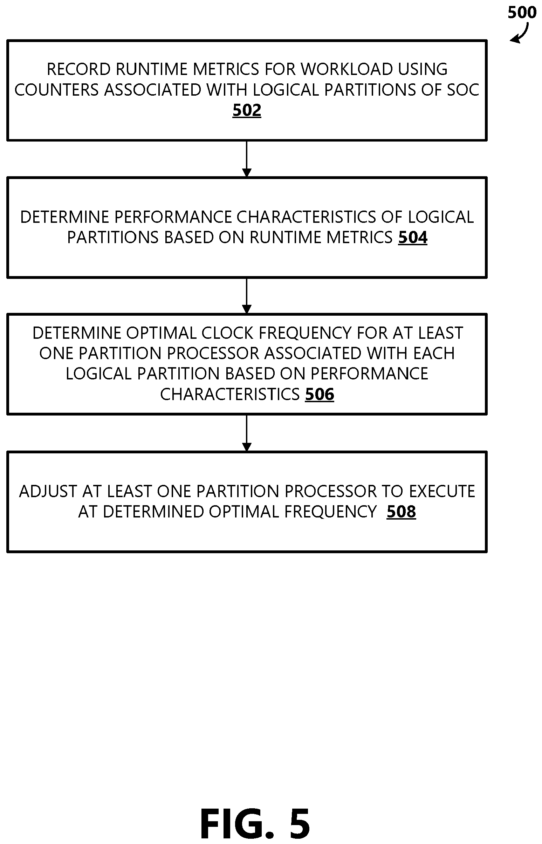

FIG. 5 depicts an example method for managing runtime profiling and adjusting the performance of a SOC. At operation 502, an SOC (e.g., SOC 101 of FIG. 1) may record runtime metrics (e.g., runtime metrics 320 of FIG. 3) for a workload (e.g., workload 310 of FIG. 3) using counters (e.g., counters 112 of FIG. 1) associated with logical partitions (e.g., partitions 111 of FIG. 1) of the SOC. In some examples, counters are used to count the amount of usage of a partition of logical partitions. The amount of usage may include the amount of time each partition is used to run a workload. In some examples, the amount of usage includes the number of usages and the frequency of usage of a partition of the logical partitions. The logical partitions may initially be run at a base clock frequency, which is the default frequency set by a system managing one or more SOCs.

The measured runtime metrics of the logical partitions may depend on the resources, such as power and electricity consumed by the logical partitions to run a workload. Runtime metrics measuring the usage of the logical partitions are directly proportional to the power requirements of the logical partitions. For example, in order for a partition to run a workload for longer periods, more power may be consumed by that partition, showing a directly proportional relation between runtime metrics and power requirements. In some examples, the runtime metrics are inversely proportional to power requirements. For example, a partition uses more power to run faster at a higher clock frequency causing a task of a workload to complete running faster.

At operation 504, the SOC determines performance characteristics (performance characteristics 340 of FIG. 3) of logical partitions based on runtime metrics determined in operation 502. The performance characteristics may include various bottlenecks and constraints observed when running a portion of a workload on the logical partitions. The bottlenecks include limitations on the logical partitions from performing to their maximum capability. The limitations occur due to an insufficient amount of resources provided for consumption to the logical partitions. For example, a partition of the logical partitions running at a slower speed may run tasks of a workload at a slower pace than the capability of a partition.

The constraints include limitations on the logical partitions to avoid performing at their maximum capability. The limitations occur due to the effects of running a workload by the logical partitions. For example, logical partitions may need to be constrained from running at their maximum capability to avoid the generation of heat that cannot be dissipated by a heat sink packaged in the logical partitions.

The SOC running method 500 may compare the runtime limits, including resource consumption by a partition, with the system-wide limits on total resource consumption and resource consumption allowance per each partition of the logical partitions to identify any violations. Suppose runtime limits associated with a partition are lower than the system limits. In that case, more workload tasks are directed to the partition, or the work may be reduced to avoid violations of system limits.

At operation 506, the SOC determines an optimal clock frequency for at least one of the partition processor associated with each partition of the logical partitions based on the performance characteristics (e.g., performance characteristics 340 of FIG. 3). In some examples, the logical partition and the partition processor are the same. In some examples, a partition may have multiple processors or processor cores. The optimal clock frequency for a partition is determined to run a partition to its maximum capability but at the same time avoid violating any system limits.

At operation 508, the SOC adjusts at least one of the partition processors to run at a respective optimal frequency determined in operation 506. The SOC begins the process of measuring runtime metrics to ensure the updated clock frequency does not negatively impact a partition's performance or to determine whether the performance of the partition may be further improved. Upon determining the performance of the partition may be further improved, method 500 is re-executed to determine revised performance controls for the partition, including an updated clock frequency. The readjustments may be needed due to the update of tasks of a workload running on the logical partitions.

FIG. 6 is a block diagram illustrating an example of the physical components of a computing device, i.e., SOC 600, for practicing aspects of the disclosure. SOC 600 is a circuit board that includes various integrated circuits (ICs). The ICs of SOC 600 may be grouped as one component. As illustrated in FIG. 6, SOC 600 includes processors 610a-c grouped in die 620. Other components of SOC 600 may be individual ICs formed using separate dies or grouped in sets on a die.

Processors 610a-c may be cores of a multi-core processor, or each a multi-core processor used to perform computations on SOC 600. Processors 610a-c may be formed using a semiconductor processing on die 620. In some examples, each processor of processors 610a-c can be part of separate dies connected by transport fabric 630.

Processors 610a-c may be general-purpose processors (e.g., CPUs) or specialized processors (e.g., GPUs, TPUs, APUs, ASICs, FPGAs, CODECS, and Signal processors). Processors 610a-c included in die 620 may be grouped by the type of processors. For example, all the specialized processors may be grouped to perform specific functions, such as matrix multiplications and vector computations in parallel. In another instance, processors 610a-c may be grouped to include both general-purpose and specialized processors. For example, processors 610a-c may include a general-purpose CPU and a special-purpose GPU to form an accelerated processing unit (APU).

Processors 610a-c may include storage in the form of a volatile memory (not illustrated in FIG. 6), such as random-access memory (RAM), or a non-volatile memory (not illustrated in FIG. 6), such as read-only memory (ROM). In some instances, processors 610a-c may share the storage as a separate component in die 620. The storage location within a die 620 or each of processors 610a-c may be a design choice. For example, processors 610a-c are part of separate dies, include separate storage within each die, and share storage (e.g., memory 650) across processors 610a-c when they are part of one die 620. Storage within die 620 and/or processors 610a-c and memory 650 may act as a cache. For example, the storage within processors 610a-c and/or die 620 is L1 cache, and the memory 650 is L2 cache. In some examples, storage in processors 610a-c and/or die 620 is registers used to store temporary results of computations performed on processors 610a-c.

Die 620 may contain other components of SOC 600 within it along with processors 610a-c for tighter integration of components of SOC 600. In some examples, not all processors 610a-c are part of die 620 due to architecture issues. For example, die 620 may include a heat dissipation mechanism (e.g., heat sink) that can only handle heat generated by one processor of processors 610a-c, requiring each processor to be part of a separate die. In another example, the physical limitations of die 620, such as die 620's real-estate can only include a certain number of transistors enough to form one processor of processors 610a-c, resulting in other processors and/or other components (e.g., storage) to be on a different die(s). In another example, processors 610a-c and/or other components of SOC 600 may be part of multiple dies as a design choice. For example, processors 610a-c can be part of separate dies to have separate clocks to control the clock frequency and, in turn, the speed of each processor of processors 610a-c separately.

Controller 640 controls processors 610a-c by increasing or decreasing their speed by changing their clock frequency and turning on or off one or more processors 610a-c. Controller 640 further controls processors 610a-c by increasing or decreasing the power provided to processors 610a-c. Controller 640 may control processors 610a-c by regulating the number of tasks of a workload performed by processors 610a-c. Controller 640 controls processors 610a-c in various manners using logic 641. Controller 640 receives data from I/O controller 642 and provides data as input to logic 641. Controller 640 measures the results of controlling processors 610a-c using sensors 643 and provides as input to further control processors 610a-c.

Logic 641 may be software, hardware, or a combination that can be programmed or hardwired to control processors 610a-c. For example, logic 641 is a firmware or FPGA that can be programmed to control processors 610a-c. Logic 641 can be a hardwired circuit that executes instructions to control processors 610a-c. Logic 641 may control the number of tasks and the amount of time a task is run on processors 610a-c. Logic 641 may send signals to update the clock frequency of processors 610a-c to update the speed of processors 610a-c, and in turn, the amount of time taken to run a task. Logic 641 may regulate the speed of processors 610a-c based on the internal capabilities of external constraints of processors 610a-c. Processors 610a-c's internal capabilities may be lower and upper limits of the clock used by processors 610a-c. In some examples, processors 610a-c internal capabilities include the amount of heat dissipated by the heat sink of each processor of processors 610a-c. External constraints of processors 610a-c may include the amount of power, current, or voltage available to run processors 610a-c. Logic 641 may manage external constraints of processors 610a-c by turning on/off processors 610a-c to distribute available power, current, or voltage to a subset of processors 610a-c. In some examples, logic 641 may be stored in memory 650. For example, logic 641 may be stored as firmware in ROM 652.

As illustrated in FIG. 6, controller 640 may include I/O controller 642 to bring data and instructions/code to run tasks on processors 610a-c. In some examples, data and instructions received by I/O controller 642 may include code of logic 641 to control processors 610a-c. I/O controller 642 may include a network controller (not illustrated) to receive data and instructions from beyond SOC 600. For example, I/O controller 642 may connect SOC 600 to a network of SOCs and other chips that are part of a computing system, such as trays of processors and other chips in a rack forming a computing system. I/O controller 642 may work with transport fabric 630 to transport data and instructions internally between processors 610a-c and memory 650. In some examples, transport fabric 630 may directly fetch instructions and data from memory 650 and transport them to and from processors 610a-c. Transport fabric 630 may be part of die 620 to integrate processors 610a-c closely. In some examples, transport fabric 630 may transport data and instructions to logic 641 to control processors 610a-c.

As illustrated in FIG. 6, controller 640 may include sensors 643 to help control the processors 610a-c. Sensors 643 may include sensors to observe the power consumption by SOC 600 and individual components of SOC 600. Sensors 643 may also include measuring the heat generated by components such as processors 610a-c when performing computations as part of running workload tasks. In some examples, sensors 643 may be part of I/O controller 642, taking as input consumed power and generated heat and outputting the total sensed amount of consumed power and generated heat.

Memory 650 may include random access memory (RAM) 651 to store data and instructions/code received by SOC 600 through I/O controller 642. Memory 650 may also include read-only memory (ROM) 652 that stores pre-programmed instructions, which may act as SOC 600's firmware.

As illustrated in FIG. 6, SOC 600 may also include clock generator 660 and power management unit 670 to help the functioning of various components of SOC 600. Clock generator 660 may set the base clock frequency of components of SOC 600, and additional clocks may set individual clock frequencies for processors 610a-c and other components of SOC 600. In some examples, clock generator 660 may be used for components of SOC 600 whose clock frequency cannot be updated. For example, I/O controllers 642 may include a PCI card interface or network interface, which runs a static clock speed and cannot be adjusted.

Power management unit 670, as its name suggests, helps in managing power supplied to components of SOC 600. Power management unit 670 may work in combination with sensors 643 to understand the intake of power and continue to increase the available power to components of SOC 600. Power management unit 670 may manage the initiation and shutdown of SOC 600 components and SOC 600 itself by providing power in a manner that does not impact the components. For example, power management unit 670 may ramp up power intake while powering up processors 610a-c to avoid excessive heat. In another example, power management unit 670 may ramp down power intake when powering down processors 610a-c to avoid power fluctuations causing spikes and dips in voltage that can stress the circuitry in processors 610a-c and other components of SOC 600. Other issues managed by power management unit 670 may include mechanical stress on transistors within the circuitry of each component of SOC 600. Further, this may also help avoid data loss and inconsistencies by letting the processors 610a-c complete the execution of instructions and safely power down and store the results in memory 650 and/or help transmit to storage connected to SOC 600 through I/O controller 642.

Power management unit 670 may be connected to other components through power lines etched on SOC 600. The etched lines carry electricity from power management unit 670 to the components of SOC 600. Power management unit 670 may regulate the voltage to avoid sudden spikes or drops. Power management unit 670 may include a voltage regulator to regulate voltage and provide the requested amount of power.

In an aspect, the technology relates to runtime profiling workload on a system on a chip (SOC). The system includes at least one processor, and memory coupled to the processor, the memory consisting of computer executable instructions that are executed by the system to perform operations. The operation include: recording, during a runtime of a workload, runtime metrics for the workload using counters associated with logical partitions of the SOC, wherein the counters calculate the usage of each of the logical partitions, determining, by a runtime profiler of the SOC, performance characteristics of the logical partitions based on the runtime metrics, determining for at least one partition processor associated with a partition of the logical partitions a respective optimal clock frequency to run the workload based on the performance characteristics, and adjusting, during the runtime of the workload, the at least one partition processor associated with the partition of the logical partitions to run the partition of the logical partitions at the respective optimal clock frequency for the workload.

In an example, counters are used to count usage amount of a partition of the logical partitions.

In an example, each partition processor associated with each of the logical partitions is running at a base clock frequency of the processor.

In an example, the runtime metrics are dependent on power requirements of the SOC measured as runtime limits. In another example, the runtime metrics are directly proportional to the power requirements. In still another example, the operations further include: comparing the runtime limits to system limits associated with the SOC, and upon determining the runtime limits are lower than the system limits associated with the SOC, increase the runtime metrics by adding work to the workload. In yet another example, the operations further include, comparing the runtime limits to the system limits associated with the SOC, and upon determining runtime limits are greater than the system limits associated with the SOC, decrease the runtime metrics by turning off a partition of the logical partitions. In still yet another example, decreasing the runtime metrics includes reducing clock frequency of a partition processor of a partition of the logical partitions.

In an example, the performance characteristics define the usage behavior of the logical partitions executing the workload.

In another aspect, the technology related to a computer-implemented method for runtime profiling workload on a system on a chip (SOC). The method includes: recording, during a runtime of a workload, runtime metrics for the workload using counters associated with logical partitions of the SOC, wherein the counters calculate the usage of each of the logical partitions, determining, by a runtime profiler of the SOC, performance characteristics of the logical partitions based on the runtime metrics, determining for at least one partition processor associated with a partition of the logical partitions an optimal clock frequency to run the workload based on the performance characteristics, and adjusting, during the runtime of the workload, the at least one partition processor associated with the partition of the logical partitions to run the partition of the logical partitions at the respective optimal clock frequency for the workload.

In an example, counters are used to count usage amount of a partition of the logical partitions.

In an example, the runtime metrics are dependent on power requirements of the SOC measured as runtime limits. In another example, the runtime limits are directly proportional to the runtime metrics. In still another example, the method further includes: comparing the runtime limits to system limits associated with the SOC, and upon determining the runtime limits are lower than the system limits associated with the SOC, increase the runtime metrics by adding work to the workload. In yet another example, the method further includes: comparing the runtime limits to the system limits associated with the SOC, and upon determining runtime limits are greater than the system limits associated with the SOC, decrease the runtime metrics by turning off a partition of the logical partitions. In still yet another example, decreasing the runtime metrics includes reducing clock frequency of a partition processor of a partition of the logical partitions.

In still another aspect, the technology relates to runtime profiling workload on a system on a chip (SOC). The system includes at least one processor, and memory coupled to the processor, the memory consisting of computer executable instructions that are executed by the system to perform operations. The operation include: recording, during a runtime of a workload, runtime metrics for the workload using counters associated with logical partitions of the SOC, determining, by a runtime profiler of the SOC, performance characteristics of the logical partitions based on the runtime metrics, determining, by a model, future usage of at least one partition of the logical partitions, and adjusting, during the runtime of the workload, clock frequency of a partition processor associated with the at least one partition of the logical partitions based on the future usage of the at least one partition of the logical partitions.

In an example, counters are used to count number of occurrences of usage of a partition of the logical partition.

In an example, each partition processor associated with each of the logical partitions is running at a base clock frequency of the processor.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

Furthermore, those skilled in the art will recognize that boundaries between the functionality of the above-described operations are merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the disclosure provides specific examples, various modifications and changes can be made without departing from the scope of the disclosure as set forth in the claims below. Accordingly, the specification and figures are to be regarded in an illustrative rather than a restrictive sense, and all such modifications are intended to be included within the scope of the present disclosure. Any benefits, advantages, or solutions to problems that are described herein with regard to a specific example are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A system on a chip (SOC) comprising:
a processor; and
memory comprising computer executable instructions that, when executed, perform operations comprising:
recording, during a runtime of a workload, runtime metrics for the workload using counters associated with logical partitions of the SOC, wherein the counters calculate the usage of each of the logical partitions;
determining, by a runtime profiler of the SOC, performance characteristics of the logical partitions based on the runtime metrics;
determining for at least one partition processor associated with a partition of the logical partitions a respective optimal clock frequency to run the workload based on the performance characteristics; and
adjusting, during the runtime of the workload, the at least one partition processor associated with the partition of the logical partitions to run the partition of the logical partitions at the respective optimal clock frequency for the workload.

2. The SOC of claim 1, at least one of:
wherein counters are used to count usage amount of a partition of the logical partitions;
wherein each partition processor associated with each of the logical partitions is running at a base clock frequency of the processor; and
wherein the performance characteristics define the usage behavior of the logical partitions executing the workload.

3. The SOC of claim 1 or 2, wherein the runtime metrics are dependent on power requirements of the SOC measured as runtime limits.

4. The SOC of claim 3, wherein the runtime metrics are directly proportional to the power requirements.

5. The SOC of claim 4, wherein the operations further comprise:
comparing the runtime limits to system limits associated with the SOC; and
upon determining the runtime limits are lower than the system limits associated with the SOC, increase the runtime metrics by adding work to the workload.

6. The SOC of claim 4, wherein the operations further comprise:
comparing the runtime limits to the system limits associated with the SOC; and
upon determining runtime limits are greater than the system limits associated with the SOC, decrease the runtime metrics by turning off a partition of the logical partitions.

7. The SOC of claim 6, wherein decreasing the runtime metrics includes reducing clock frequency of a partition processor of a partition of the logical partitions.

8. A computer implemented method for runtime profiling workload on a system on a chip (SOC), the method comprising:
recording, during a runtime of a workload, runtime metrics for the workload using counters associated with logical partitions of the SOC, wherein the counters calculate the usage of each of the logical partitions;
determining, by a runtime profiler of the SOC, performance characteristics of the logical partitions based on the runtime metrics;
determining for at least one partition processor associated with a partition of the logical partitions an optimal clock frequency to run the workload based on the performance characteristics; and
adjusting, during the runtime of the workload, the at least one partition processor associated with the partition of the logical partitions to run the partition of the logical partitions at the respective optimal clock frequency for the workload.

9. The method of claim 8, at least one of:
wherein counters are used to count usage amount of a partition of the logical partitions; and
wherein each partition processor associated with each of the logical partitions is running at a base clock frequency.

10. The method of claim 8 or 9, wherein the runtime metrics are dependent on power requirements of the SOC measured as runtime limits.

11. The method of claim 10, at least one of:
wherein the runtime limits are directly proportional to the runtime metrics; and
wherein the method further comprises:
comparing the runtime limits to system limits associated with the SOC; and
upon determining the runtime limits are lower than the system limits associated with the SOC, increase the runtime metrics by adding work to the workload.

12. The method of claim 10, wherein the method further comprises:
comparing the runtime limits to the system limits associated with the SOC; and
upon determining runtime limits are greater than the system limits associated with the SOC, decrease the runtime metrics by turning off a partition of the logical partitions.

13. The method of claim 12, wherein decreasing the runtime metrics includes reducing clock frequency of a partition processor of a partition of the logical partitions.

14. A system on a chip (SOC) comprising:
a processor; and
memory comprising computer executable instructions that, when executed, perform operations comprising:
recording, during a runtime of a workload, runtime metrics for the workload using counters associated with logical partitions of the SOC;
determining, by a runtime profiler of the SOC, performance characteristics of the logical partitions based on the runtime metrics;
determining, by a model, future usage of at least one partition of the logical partitions; and
adjusting, during the runtime of the workload, clock frequency of a partition processor associated with the at least one partition of the logical partitions based on the future usage of the at least one partition of the logical partitions.

15. The SOC of claim 14, at least one of:
wherein counters are used to count number of occurrences of usage of a partition of the logical partition; and
wherein each partition processor associated with each of the logical partitions is running at a base clock frequency of the processor.
